# EUROPÄISCHE PATENTANMELDUNG

(11) **EP 3 912 589 A1**
(43) Veröffentlichungstag der Anmeldung: **24.11.2021**
(21) Anmeldenummer: 21000107.9
(22) Anmeldetag: 16.04.2021
(51) Int. Cl.: A61C 5/55

(54) **WERKZEUG ZUR ZAHNWURZELBEHANDLUNG**

(30) Priorität: 19.05.2020 DE 102020002981
(71) Anmelder: Wiechmann, Peter, 30163 Hannover (DE)
(72) Erfinder: Wiechmann, Peter, 30163 Hannover (DE)
(74) Vertreter: Döring, Roger

(57) **Zusammenfassung**

Es wird ein Verfahren zur Wurzelbehandlung eines Zahns angegeben, mit welchem Guttapercha in den Wurzelkanal eingebracht wird. Dazu wird ein Guttaperchastift (6) in den Wurzelkanal eingesetzt und durch einen Plugger (5) mit Druck und Wärme beaufschlagt. Der Guttaperchastift (6) wird mit einer Länge vorgefertigt, die dem Abstand der Spitze des Wurzelkanals von der Spitze des so weit wie möglich in den Wurzelkanal eingeführten Pluggers (5) entspricht.

## Beschreibung

Die Erfindung betrifft ein Verfahren zur Zahnwurzelbehandlung mit Einbringung von Guttapercha in den Wurzelkanal, mit welchem die Guttapercha im Wurzelkanal unter eines Druck und Wärme erzeugenden Pluggers mit Druck und Wärme beaufschlagt wird.

Ein derartiges Verfahren ist beispielsweise in der US 2004/0137404 A1 beschrieben.

Ein solches Verfahren wird zur Erhaltung eines Zahnes eingesetzt, wenn die Pulpa des Zahns irreversibel entzündet oder abgestorben ist. Eine dafür bekannte Technik ist beispielsweise die vertikale Kondensationstechnik mit warmer Guttapercha - im Folgenden kurz "GP" genannt - (kaltnermedia GmbH, Georg Thieme Verlag KG, Klinik und Praxis). Dabei wird der Wurzelkanal mit warmer Guttapercha - im Folgenden kurz "GP" genannt - und einem als "Sealer" bezeichneten Dichtmaterial gefüllt.

Zur Vorbereitung des Verfahrens werden die Pulpa des Zahns und insbesondere der Wurzelbereich desselben mechanisch und chemisch gereinigt. Die Reinigung dient dazu, das Wurzelkanalsystem von allen organischen Anteilen sowie antigen wirkenden Substanzen und Toxinen zu befreien. Die Reinigung erfolgt durch Feilensysteme, die abwechselnd mit den bekannten chemischen Lösungen eingesetzt werden. Dabei wird der Wurzelkanal mechanisch so bearbeitet, dass sich ein kontinuierlich konisch verlaufender Hohlraum ergibt. Abschließend wird der gesamte Hohlraum erneut chemisch gereinigt und mit Alkohol und sterilen Papierspitzen getrocknet.

Nach Beendigung dieser Vorbereitungen wird ein mit einem Sealer ausgerüsteter, auch als "Masterpoint" bezeichneter GP-Stift in den Wurzelkanal des Zahnes eingesetzt und in demselben so weit vorgeschoben, bis er dessen Spitze (Foramen apicale) erreicht hat und nicht mehr weitergeschoben werden kann. Danach wird der GP-Stift für eine kurze Zeitdauer von beispielsweise 5 Sekunden mit einem Heat Carrier auf eine Temperatur von beispielsweise 200 °C erwärmt. Der GP-Stift wird dann mit der Spitze des Heat Carriers oberhalb des apikalen Bereichs abgetrennt und der abgetrennte Teil des GP-Stifts wird entfernt. Anschließend wird mit einem auch als "Heat carrier" und "Plugger" bezeichneten Wärme- und Druckgerät -im Folgenden nur noch kurz "Plugger" genannt - der im Wurzelkanal verbliebene GP-Stift unter Anwendung von Druck erwärmt. Dadurch sollen das GP-Material und der Sealer in alle Verzweigungen des Wurzelkanalsystems eindringen. Nach Entfernung des Pluggers wird der im Zahn vorhandene Hohlraum mit GP auf- bzw. ausgefüllt. Die Abtrennung des GP-Stiftes nach seiner Erwärmung im Bereich oberhalb des apikalen Bereichs ist oft problematisch mit dem nicht kontrollierbaren Mangel, dass der GP-Stift aus seiner Position verschoben wird und dabei einerseits nicht mehr bis in die Spitze des Wurzelkanals reicht und die GP andererseits nicht vollständig aus dem mittleren und oberen Drittel des Wurzelkanals vor dem Auffüllen mit GP (Backfill) entfernt wird.

Aus der US 2003/0219699 A1 geht ein mit Stufen unterschiedlichen Durchmesser versehener Plugger aus Metall hervor, der beim Abdichten eines Zahnwurzelkanals eingesetzt werden soll. Zum Abdichten des Wurzelkanals wird Guttapercha verwendet, das in den Wurzelkanal eingebracht wird. Mittels des Pluggers soll eine Verdrehung oder Kompaktierung der Guttapercha erreicht werden.

In der US 3,949,479 ist die übliche Behandlung eines Wurzelkanals eines Zahns beschrieben, mit Entfernung der Pulpa und Reinigung des Kanals. Der gereinigte Wurzelkanal wird nach und nach mit Stücken aus Guttapercha gefüllt, und zwar zunächst mit einem ersten Konus, der kondensiert wird, bis er den Hohlraum im Wurzelkanal ausfüllt. Es folgen dann ein zweiter Konus und weitere konusartige Bauteile.

Aus der US 7,097,454 B1 geht ein mit Markierungen versehener GP-Stift hervor, der zum Abdichten desselben in einen Wurzelkanal eingesetzt werden soll. Die Markierungen des GP-Stifts stellen sicher, dass derselbe bis in die Spitze des Wurzelkanals hineinreicht, so dass keine Hohlräume in demselben verbleiben.

Die DE 199 16 114 A1 beschreibt eine Einstellehre bzw. ein Werkzeug, das als Wurzelkanalwerkzeug verwendet werden kann.

Aus der DE 20 2005 018 748 U1 geht eine Sonde für das Abdichten des apikalen Bereichs eines Zahnwurzelkanals hervor. Sie besteht aus einem strangförmigen, flexiblen Mittelstück mit einer Sollbruchstelle, an dessen Ende ein GP-Korken mit einem Kunststoffkern angebracht ist. Die Sonde kann in einen Zahnwurzelkanal eingesetzt und an der Sollbruchstelle abgebrochen werden. Der GP-Korken verbleibt dann im Wurzelkanal.

Die eingangs erwähnte US 2004/0137404 A1 befaßt sich mit dem Abdichten eines Wurzelkanals eines Zahns mit einem GP-Stift. Der GP-Stift wird mit einem Werkzeug in einen Wurzelkanal eingesetzt und dann im Wurzelkanal abgetrennt, so dass eine Länge desselben im unteren Bereich des Wurzelkanals in demselben verbleibt. Diese Länge wird an einer vorgegebenen Stelle mittels eines erwärmten Werkzeugs abgetrennt. Danach wird auf die abgetrennte Länge Kondensationsdruck ausgeübt. Als Siegel wird dann eine Abdeckung aufgebracht, für die vorher ein Freiraum dadurch geschaffen wird, dass Material von der GP-Spitze entfernt wird.

Eine mangelhafte Ausfüllung des Wurzelkanals eines Zahns soll durch die Erfindung vermieden werden.

Dazu wird ein Verfahren eingesetzt, das dadurch gekennzeichnet ist,
- das zunächst eine zwischen einem auf der Oberkante des Zahns liegenden Bezugspunkt und der Spitze des Wurzelkanals liegende Meßstrecke gemessen wird,
- dass danach ein Plugger so weit wie möglich in den Wurzelkanal eingeführt und seine zwischen dem Bezugspunkt und seiner Spitze liegende Meßlänge gemessen wird,
- dass nach Entfernen des Pluggers ein Guttaperchastift in den Wurzelkanal eingesetzt wird, dessen Länge um mindestens 1 mm größer als die Differenz zwischen der Meßstrecke und der Meßlänge des Pluggers ist und der mit seiner Spitze an der Spitze des Wurzelkanals anliegt, und
- dass der Guttaperchastift mittels des wieder in den Wurzelkanal eingesetzten Pluggers unter Druck erwärmt wird.

Ein wesentlicher Vorteil dieses Verfahrens besteht darin, dass der Wurzelkanal voll ständig mit GP gefüllt werden kann, ohne dass während des Verfahrens in den Wurzelkanal eingeführtes GP-Material wieder entfernt werden muß. Die Abmessungen der in den Wurzelkanal einzusetzenden GP-Spitze werden vielmehr vor dem Einsetzen derselben in den Wurzelkanal außerhalb des Zahns so genau dimensioniert, dass die GP-Spitze das Ende des Wurzelkanals an dessen Spitze so genau und vollständig ausfüllt, dass der Plugger direkt in Arbeitsposition gebracht und in Betrieb genommen werden kann.

Dazu wird nach allen bekannten und im Vorangehenden geschilderten Maßnahmen zunächst die Meßstrecke zwischen dem Bezugspunkt und der Spitze des Wurzelkanals gemessen und dokumentiert bzw. an geeigneter Stelle abgelegt. Danach wird ein an sich beliebiger Plugger, der nur möglichst genau in den Wurzelkanal passen sollte, so weit wie möglich in den Wurzelkanal eingeschoben. Seine Meßlänge wird dann gemessen und ebenfalls dokumentiert. Danach wird eine GP-Spitze mit der durch die Differenz von Meßstrecke und Meßlänge vorgegebenen Länge hergestellt und mittels eines geeigneten Werkzeugs in den Wurzelkanal so weit eingesetzt, dass ihre Spitze an der Spitze des Wurzelkanals an demselben anliegt. Nach Entfernen des Werkzeugs wird der Plugger bis zur Anlage am GP-Stift wieder in den Wurzelkanal eingeführt. Bei seinem Betrieb wird der GP-Stift unter Druck erwärmt, wodurch die erforderliche Erwärmung des GP-Stiftes und der erforderliche hydrostatische Druck erzeugt werden. Eine Kontrolle des ganzen Vorgangs kann per Röntgenaufnahme erfolgen. Die GP und ein gegebenenfalls vorhandene Sealer dringen dadurch in alle Verästelungen des Wurzelkanals ein. Dafür wird eine Zeit von etwa 3 bis 5 Sekunden benötigt. Nach einer ausreichenden Abkühlung des GPs wird der Plugger entfernt und der restliche Hohlraum des Zahns wird mit GP aufgefüllt.

Mit diesem Verfahren ist sichergestellt, dass der apikale Bereich des Wurzelkanals vor der Anwendung von Druck und Wärme auf einfache Weise vollständig mit GP bzw. Sealer ausgefüllt ist. Die Spitze der in den apikalen Bereich eingesetzten GP-Spitze reicht mit Sicherheit bis an die äußerste Spitze des apikalen Bereichs des Wurzelkanals. Undefinierte Verfahrensschritte und deren Nachteile, insbesondere das Durchtrennen eines im Wurzelkanal befindlichen GP-Stiftes und die Entfernung des abgetrennten Bereichs sind dadurch vermieden.

Die in den apikalen Bereich des Wurzelkanals eingesetzte GP-Spitze ist etwa 1 mm länger als der vorher ausgemessene und eingesetzte Plugger. Damit ist sichergestellt, dass die Erwärmung der eingebrachten GP-Spitze erfolgen und der hydrostatische Druck zur Verdichtung des GP im Wurzelkanal ausgeübt werden können. Dadurch ist erreicht, dass der Wurzelkanal nach Beendigung des Verfahrens mit erhöhter Sicherheit mit GP gefüllt ist.

Nach ausreichender Erwärmung des GPs mit dem Plugger wird die Wärmezufuhr abgebrochen. Der Plugger bleibt zur Aufrechterhaltung des Drucks noch solange in Position, bis das GP abgekühlt ist. Zum Herausnehmen des Pluggers aus dem Zahn wird derselbe mit Vorteil noch einmal kurz erwärmt, damit er sich ohne. Beeinträchtigung des eingefüllten GPs von demselben löst.

Das Verfahren nach der Erfindung wird anhand der Zeichnungen als Ausführungsbeispiel erläutert.

Es zeigen:
Fig. 1 bis 3 Querschnitte eines Zahnes in sehr schematischer Darstellung in unterschiedlichen Stadien des Verfahrens.
Fig. 4 ein bei dem Verfahren eingesetztes Werkzeug.

In den Zeichnungen sind Schnitte durch einen Zahn nur rein schematisch dargestellt. Sie dienen nur zur grundsätzlichen Erläuterung des Verfahrens nach der Erfindung.

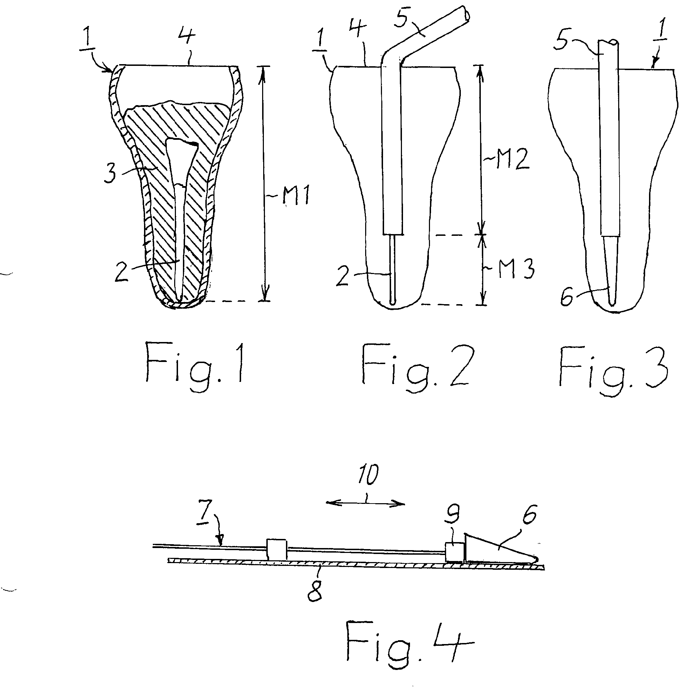

In Fig. 1 ist ein Querschnitt eines Schneidezahns 1 mit nur einem Wurzelkanal 2 (Pulpa) rein schematisch dargestellt, der einen als Dentin bezeichneten Zahnkörper 3 und Zahnschmelz aufweist. Zu Beginn des Verfahrens wird zunächst der Zahnkörper 3 im Bereich der Zahnkrone entfernt. Danach wird der Wurzelkanal 2 in üblicher Technik mechanisch und chemisch gereinigt.

Anschließend wird die Strecke zwischen einem auf der Oberkante 4 des Zahns 1 liegenden Bezugspunkt und der Spitze des Wurzelkanals 2 als Meßstrecke M1 gemessen. Danach wird ein Plugger 5, der an eine elektrische Stromquelle angeschlossen und durch elektrischen Strom beheizbar ist, so weit wie möglich in den Wurzelkanal 2 eingeschoben. Dann wird die Länge zwischen dem Bezugspunkt und der Spitze des Pluggers 5 als Meßlänge M2 gemessen und registriert. Die verbleibende Länge M3 des Wurzelkanals 2 entspricht dem Aufnahmeraum für die GP-Spitze 6. Sie wird entsprechend der Länge M3 präpariert, und zwar mit einer Zusatzlänge von mindestens 1 mm. Danach wird die GP-Spitze 6 mittels eines Werkzeugs 7 in den Wurzelkanal 2 eingesetzt.

Das Werkzeug 7 ist beispielsweise ein langgestreckter Träger 8, auf dem ein in seiner Längsrichtung verschiebbarer Schieber 9 angeordnet ist, der in Richtung des Doppelpfeils 10 verschiebbar ist. Im Ausgangszustand ist an der Spitze des Trägers 8 eine Auflagefläche vorhanden, in welchem die GP-Spitze 6 angeordnet werden kann. Der Träger 8 kann beispielsweise eine Röhre sein, die an ihren einem Ende mit der Auflagefläche ausgerüstet ist.

Zur Positionierung der GP-Spitze 6 im Wurzelkanal 2 wird der mit der GP-Spitze 6 ausgerüstete Träger 8 in denselben eingeführt und die GP-Spitze 6 wird mittels des Schiebers 9 so weit geschoben, bis sie ihre vorgegebene Position gemäß Fig.3 erreicht hat. Danach wird der Träger 8 entfernt. Anschließend wird der Plugger 5 wieder in den Wurzelkanal 2 bis zur Anlage an der GP-Spitze 6 eingesetzt. Der Plugger 5 wird dann mit Einschalten der Stromquelle in den Betriebszustand gebracht, wodurch die GP-Spitze 6 unter Druck für beispielsweise 3 Sekunden auf eine Temperatur von 100 °C erwärmt wird. Die Erwärmung wird nach einer vorgegebenen Zeitdauer abgebrochen, während der Druck auf die GP-Spitze 6 noch so lange aufrechterhalten wird, bis die GP ausreichen abgekühlt ist. Nach einer sehr kurzzeitigen Einschaltung der Stromquelle wird die GP zum leichten Lösen des Pluggers 5 aus dem Wurzelkanal 2 herausgezogen. Der verbleibende Hohlraum im Zahn 1 wird dann in üblicher Technik mit GP gefüllt.

## Patentansprüche

1. Verfahren zur Zahnwurzelbehandlung mit Einbringung von Guttapercha in den Wurzelkanal, mit welchem die Guttapercha im Wurzelkanal unter eines Druck und Wärme erzeugenden Pluggers mit Druck und Wärme beaufschlagt wird, **dadurch gekennzeichnet,**
- **dass** zunächst eine zwischen einem auf der Oberkante (4) des Zahns (1) liegenden Bezugspunkt und der Spitze des Wurzelkanals (2) liegende Meßstrecke (M1) gemessen wird,
- **dass** danach ein Plugger (5) so weit wie möglich in den Wurzelkanal (2) eingeführt und seine zwischen dem Bezugspunkt und seiner Spitze liegende Meßlänge (M2) gemessen wird,
- **dass** nach Entfernen des Pluggers (5) ein Guttaperchastift (6) in den Wurzelkanal (2) eingesetzt wird, dessen Länge um mindestens 1 mm größer als die Differenz zwischen der Meßstrecke (M1) und der Meßlänge (M2) des Pluggers (5) ist und der mit seiner Spitze an der Spitze des Wurzelkanals (2) anliegt, und
- **dass** der Guttaperchastift (6) mittels des wieder in den Wurzelkanal (2) eingesetzten Pluggers (5) unter Druck erwärmt wird.

2. Verfahren nach Anspruch 1, **dadurch gekennzeichnet, dass** die Erwärmung des Pluggers (5) nach einer vorgegebenen Zeitdauer abgeschaltet wird, während der Druck auf den Guttaperchastift (6) aufrechterhalten wird.

3. Verfahren nach Anspruch 1 oder 2, **dadurch gekennzeichnet,**
- **dass** nach ausreichender Abkühlung des Guttaperchastiftes (6) die Druckbelastung desselben durch den Plugger (5) aufgehoben und der Guttaperchastift (6) kurzzeitig erwärmt wird, und
- **dass** der Guttaperchastift (6) dann entfernt wird.

4. Verfahren nach Anspruch 1, **dadurch gekennzeichnet, dass** ein mit einem Sealer ausgerüsteter Guttaperchastift (6) verwendet wird.

5. Verfahren nach Anspruch 1, **dadurch gekennzeichnet, dass** zum Einsetzen des Guttaperchastifts (6) ein mit einem Schieber (9) ausgerüstetes Werkzeug verwendet wird.

6. Verfahren nach einem der Ansprüche 1 bis 5, **dadurch gekennzeichnet, dass** nach dem Entfernen des Pluggers (5) der Zahn (1) mit Guttapercha aufgefüllt wird.
